# EUROPÄISCHE PATENTSCHRIFT

(11) **EP 3 179 124 B1**
(45) Veröffentlichungstag und Bekanntmachung des Hinweises auf die Patenterteilung: **25.07.2018**
(21) Anmeldenummer: 16202444.2
(22) Anmeldetag: 06.12.2016
(51) Int. Cl.: F16D 13/64

(54) **REIBLAMELLE**
FRICTION DISC
LAMELLE DE FRICTION

(30) Priorität: 11.12.2015 AT 510562015
(43) Veröffentlichungstag der Anmeldung: 14.06.2017
(73) Patentinhaber: Miba Frictec GmbH, 4663 Laakirchen (AT)
(72) Erfinder: HARTNER, Gerhard, 4654 Bad Wimsbach (AT); MARKOWSKY, Florian, 4810 Gmunden (AT)
(74) Vertreter: Burger, Hannes

(56) Entgegenhaltungen:
- EP-A2- 1 876 369
- EP-A2- 2 463 539
- DE-A1-102015 213 946
- US-A1- 2008 156 611
- US-A1- 2008 173 516
- US-A1- 2013 032 271

## Beschreibung

Die Erfindung betrifft eine Reiblamelle für nasslaufende Anwendungen umfassend einen ringförmigen Grundkörper, der in axialer Richtung eine erste und eine zweite Oberfläche aufweist, und auf dem auf zumindest einer der ersten und der zweiten Oberfläche ein Reibbelag angeordnet ist, wobei der Reibbelag durch mehrere voneinander getrennte Reibbelagsegmente gebildet ist, wobei in jedem der Reibbelagsegmente eine erste Ölnut und mehrere zweite Ölnuten ausgebildet sind, wobei die ersten Ölnuten sich von einer radial inneren Stirnfläche der Reibbelagsegmente in Richtung auf eine radial äußere Stirnfläche der Reibbelagsegmente erstrecken und beabstandet zur radial äußeren Stirnfläche enden Siehe den nächstliegenden Stand der Technik US2008/156611. Weiter betrifft die Erfindung eine nasslaufende Kupplung umfassend mehrere Innenlamellen und mehrere Außenlamellen, wobei in axialer Richtung die Innenlamellen und die Außenlamellen abwechselnd angeordnet sind.

In nasslaufenden Lamellenkupplungen wird ein Fluid, in der Regel ein Schmieröl, dazu verwendet, um die durch die Reibung entstehenden Wärme besser abtransportieren zu können. Es soll damit die Überhitzung der Reibbeläge und die daraus resultierende vorzeitige Zerstörung verhindert werden. Aus diesem Grund ist im Stand der Technik auch bereits eine Vielzahl an verschiedenen Designs von nutierten Reibbelägen beschrieben worden. Mit den Nuten soll u.a. eine bessere Verteilung des Fluids über die Reibfläche bewirkt werden.

Nasslaufende Reibsysteme habe aber auch einen systembedingten Nachteil. In Anhängigkeit von der Viskosität des Fluids wird durch dieses ein mehr oder weniger großes Schleppmoment verursacht, da die Reibflächen über das Fluid mehr oder weniger mit der Oberfläche der jeweiligen Gegenlamellen in Kontakt stehen. Diese wiederum führt zu einem Leistungsverlust dieser Reibsysteme. Um dem zu begegnen wurde beispielsweise in der EP 1 783 390 A2 vorgeschlagen, in den Reibbelägen abwechselnd radial nach außen und radial nach innen offene Nuten anzuordnen.

Der vorliegenden Erfindung liegt die Aufgabe zugrunde, eine Reiblamelle zu schaffen, die im Betrieb in einer nasslaufenden Kupplung eine verbesserte Leistungsfähigkeit aufweist.

Die Aufgabe der Erfindung wird bei der eingangs genannten Reiblamelle dadurch gelöst, dass die zweiten Ölnuten eine maximale Breite in Umfangsrichtung des Grundkörpers aufweisen, die zwischen 1 % und 20 % einer maximalen Breite der ersten Ölnut in gleicher Richtung beträgt und dass sich die zweiten Ölnuten ununterbrochen und unverzweigt von der radial inneren Stirnfläche des Reibsegments bis in die radial äußeren Stirnfläche des Reibsegments erstrecken.

Weiter wird die Aufgabe der Erfindung mit der eingangs genannten nasslaufenden Kupplung gelöst, bei der die Innenlamellen erfindungsgemäß ausgebildet sind.

Von Vorteil ist dabei, dass die Beölung der Reibbelagsegmente über die erste Nut wie an sich bekannt eine rasche Abfuhr der entstehenden Reibwärme ermöglicht. Durch die zusätzlich angeordneten, sehr dünnen zweiten Nuten kann hingegen das Schleppmoment deutlich reduziert werden, wodurch die Leistungsfähigkeit der nasslaufenden Kupplung verbessert werden kann. Darüber hinaus bewirken diese dünnen zweiten Nuten, dass allfällige vorhandene Fremdpartikel im Schmieröl zumindest teilweise zurückgehalten werden, wodurch diese Nuten von reinerem Schmieröl durchströmt werden. Es kann damit die Beölung der Reibbelagsegmente verbessert werden. Allfällige Schmutzpartikel können über die zwischen den Reibbelagssegmenten aufgrund deren Beabstandung zueinander ausgebildeten Nuten abgeführt werden.

Nach einer Ausführungsvariante der Reiblamelle kann vorgesehen sein, dass die zweiten Ölnuten einen dreieckförmigen Querschnitt aufweisen. Einerseits können damit die voranstehenden Effekte verbessert werden. Andererseits sich dadurch die zweiten Ölnuten einfacher herstellbar, in dem eine entsprechend geformtes, schneidenartiges Werkzeug einfacher in die Reibbelagsegmente eingedrückt werden kann. Die dünne Geometrie der zweiten Ölnuten ist damit mit höherer Präzision darstellbar.

Zur Vermeidung eines Ölstaus in der ersten Nut kann gemäße einer anderen Ausführungsvariante der Reiblamelle vorgesehen sein, dass eine dritte Ölnut an dem radial äußeren Ende der ersten Ölnut anschließend angeordnet ist, und sich diese dritte Ölnut bis in die radial äußere Stirnfläche des Reibsegments erstreckt.

Vorzugsweise weist diese dritte Ölnut ebenfalls eine maximale Breite in Umfangsrichtung des Grundkörpers auf, die zwischen 1 % und 20 % einer maximalen Breite der ersten Ölnut in gleicher Richtung beträgt, wodurch die voranstehend genannten Effekte unterstützt werden.

Es kann dabei auch vorgesehen sein, dass ein Übergang von der ersten Ölnut in die dritte Ölnut zumindest teilweise abgeschrägt ist. Es kann damit der Übertritt des Schmieröls von der ersten in die dritte Ölnut verbessert werden, wodurch die Schmiermittelabführ effektiver ausgebildet werden kann.

Die zweiten Ölnuten und/oder die dritte Ölnut weisen/weist bevorzugt eine Tiefe in axialer Richtung auf, die zwischen 5 % und 55 % einer Reibsegmentdicke in gleicher Richtung beträgt. Einerseits kann damit das durch die zweiten Ölnuten und/oder die dritte Ölnut zur Verfügung gestellte Volumen besser an die gewünschte Reduktion des Schleppmomentes angepasst werden, andererseits wird damit trotz höher ausbildbaren Volumens die Reibleistung nicht bzw. nicht wesentlich beeinflusst, da durch die sehr dünnen Nuten die Reiboberfläche nicht wesentlich reduziert wird. Bei einer Tiefe der zweiten Ölnuten und/oder die dritte Ölnut von mehr als 55 % besteht hingegen die Gefahr, dass die Reibleistung der Reiblamelle in Folge von Instabilitäten durch diese "schnittartigen" Nuten wieder reduziert wird.

Es kann weiter vorgesehen sein, dass sich die erste Ölnut in axialer Richtung durchgehend durch das Reibsegment bis zum Grundkörper erstreckt. Mit dieser Ausführungsvariante der Reiblamelle kann eine verbesserte Kühlung des Grundkörpers der Reiblamelle erreicht werden, ohne dass hierfür Durchbrüche durch den Grundkörper angebracht werden müssen, wie diese teilweise im Stand der Technik beschrieben wird.

Um das Einströmen des Öls in die erste Ölnut zu verbessern, kann vorgesehen sein, dass die erste Ölnut mit einem sich in Richtung auf die radial innere Stirnfläche des Reibsegments erweiternden Querschnitt ausgebildet ist.

Zur Erhöhung des Ölvolumens in der Reiblamelle kann weiter vorgesehen sein, dass die erste Ölnut im Bereich des radial äußeren Endes mit einer Querschnittserweiterung ausgebildet ist. Gleichzeitig kann dieses zusätzliche Volumen zur Reduktion eines Ölstaus in der Reiblamelle beitragen, sodass das Öl kontrollierter aus der Reiblamelle ausströmen kann.

Gemäß einer bevorzugten Ausführungsvariante dazu kann die erste Ölnut zumindest annähernd pilzförmig ausgebildet sein, wodurch die Pufferwirkung der ersten Ölnut verbessert werden kann.

Es ist möglich, dass sich die zweiten Ölnuten und/oder die dritte Ölnut in radialer Richtung erstrecken/erstreckt, wodurch das Einströmen des Öls in und das Ausströmen des Öls aus den ersten zweiten Ölnuten und/oder der dritten Ölnut durch die Fliehkraftwirkung verbessert werden kann.

Um das Öl länger im Bereich der Reibflächen zu halten kann aber auch vorgesehen sein, dass sich die zweiten Ölnuten und/oder die dritte Ölnut in einem spitzen Winkel zur radialen Richtung erstrecken/ erstreckt

Zum besseren Verständnis der Erfindung wird diese anhand der nachfolgenden Figuren näher erläutert.

Es zeigen jeweils in vereinfachter, schematischer Darstellung:
- Fig. 1: einen Ausschnitt aus einer Lamellenkupplung in Seitenansicht;
- Fig. 2: eine Reiblamelle in Draufsicht;
- Fig. 3: ein Reiblamellensegment in Draufsicht;
- Fig. 4: das Reiblamellensegment nach Fig. 3 in Stirnseitenansicht geschnitten gemäß der Linie IV-IV in Fig. 3;
- Fig. 5: eine andere Ausführungsvariante eines Reiblamellensegments in Draufsicht;
- Fig. 6: eine weitere Ausführungsvariante eines Reiblamellensegments in Draufsicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und bei einer Lageänderung sinngemäß auf die neue Lage zu übertragen.

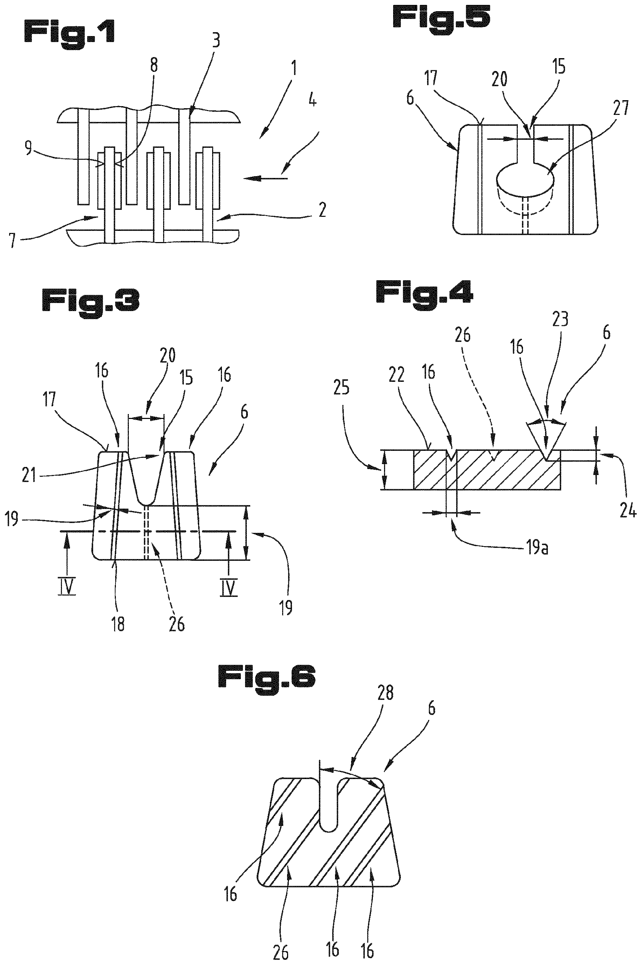

In Fig. 1 ist ein Ausschnitt aus einer nasslaufenden Lamellenkupplung 1 dargestellt. Die Lamellenkupplung 1 weist mehrere Innenlamellen 2 und mehrere Außenlamellen 3 auf. Die Innenlamellen 2 sind in einer Axialrichtung 4 abwechselnd mit den Außenlamellen 3 angeordnet. Über einen entsprechenden Betätigungsmechanismus sind die Innenlamellen 2 relativ zu den Außenlamellen 3 in der Axialrichtung 4 verstellbar, sodass zwischen den Innenlamellen 2 und den Außenlamellen 3 ein Reibschluss ausgebildet wird.

Dieser prinzipielle Aufbau einer nasslaufenden Lamellenkupplung 1 ist aus dem Stand der Technik bekannt. Zu weiteren Einzelheiten dazu sei daher auf diesen einschlägigen Stand der Technik verwiesen.

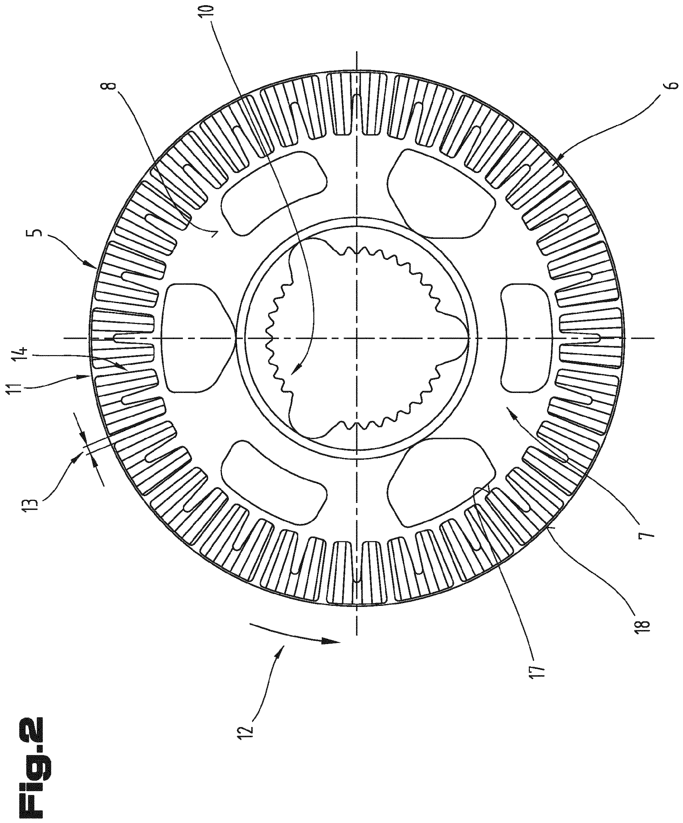

In Fig. 2 ist eine Reiblamelle 5 für nasslaufende Anwendungen mit einer ersten Ausführungsvariante von Reibbelagssegmenten 6 gezeigt. Ein derartiges Reibbelagssegment 6 in Fig. 3 in Draufsicht und in Fig. 6 in Stirnansicht geschnitten dargestellt.

Vorzugsweise bilden die Reiblamellen 5 die Innenlamellen 2 in der voranstehend beschriebenen Lamellenkupplung 1. Es besteht aber auch die Möglichkeit, dass die Reiblamellen die Außenlamellen 3 in der Lamellenkupplung 1 bilden.

Die Reiblamelle 5 umfasst bzw. besteht aus einem zumindest annährend ringförmigen Grundkörper 7, auf dem die Reibbelagssegmente6 angeordnet sind.

Der Grundkörper 7 weist eine erste Oberfläche 8 und eine dieser in der Axialrichtung 3 gegenüberliegende zweite Oberfläche 9 auf, wie dies aus Fig. 1 ersichtlich ist. An einem radial inneren Umfang des Grundkörpers ist eine Verzahnung 10 ausgebildet, mit der die drehfeste Verbindung der Reiblamelle 5 in der Lamellenkupplung 1 hergestellt wird, wie dies an sich bekannt ist. Die in Fig. 2 gezeigt Ausbildung der Verzahnung 10 ist aber nicht beschränkend zu verstehen, da auch andere Formen von Verzahnungen 10 möglich sind.

Die Reibbelagssegmente 6 sind entlang eines radial äußeren Umfangs 11 und bevorzugt beabstandet zu diesem in einer Umfangsrichtung 12 nebeneinanderliegend angeordnet. Zwischen den einzelnen Reibbelagssegmenten 6 ist vorzugsweise ein Abstand 13 ausgebildet, sodass zwischen den Reibbelagssegmenten 6 Kanäle 14 für ein Fluid, insbesondere eine Schmiermittel, vorzugsweise ein Schmieröl, ausgebildet sind. Wie aus Fig. 2 ersichtlich, sind die Reibbelagssegmente 6 vollumfänglich angeordnet.

Die Reibbelagssegmente 6 sind zumindest auf einer der ersten und der zweiten Oberfläche 8, 9 des Grundkörpers 7 angeordnet. Vorzugsweise sind jedoch beide Oberflächen 7, 8 des Grundkörpers 7 mit den Reibbelagssegmenten 6 belegt, wie dies aus Fig. 1 ersichtlich ist.

Die Verbindung der Reibbelagssegmente 6 mit dem Grundkörper 7 erfolgt üblicherweise durch eine Verklebung, insbesondere mit einem Harz.

Der Grundkörper 7 besteht insbesondere aus einem metallischen Werkstoff, vorzugsweise aus einem Stahl.

Die Reibbelagssegmente 6 sind insbesondere durch ein faserverstärktes Harz gebildet, beispielsweise durch ein harzgetränktes Papier. Derartige Reibbeläge sind aus dem Stand der Technik bekannt, auf den in diesem Zusammenhang verwiesen wird.

Vorzugsweise sind alle Reibbelagsegmente 6 einer Reiblamelle 5 gleich ausgebildet. Aus diesem Grund wird im Folgenden nur ein Reibbelagssegment 6 beschrieben. Diese Ausführungen sind aber in der bevorzugten Ausführungsvariante der Reiblamelle 5 auf sämtliche Reibbelagssegmente 6 zu übertragen.

Ebenso sind vorzugsweise alle in der Lamellenkupplung 1 angeordneten Reiblamellen 5 gleich ausgebildet. Es besteht aber auch die Möglichkeit, dass die Reibbelagsegmente 6 einer der Oberflächen 7, 8 oder der ersten Oberfläche 7 im Vergleich zu den Reibbelagssegmenten der zweiten Oberfläche 8 unterschiedlich ausgebildet sind. Insbesondere betrifft dies die genaue Ausbildung der im nachstehenden noch näher erläuterten Nutierung der Reibbelagssegmente 6.

Wie besser aus den Fig. 3 und 4 ersichtlich, sind in jedem der Reibbelagsegmente 6 eine erste Ölnut 15 und mehrere zweite Ölnuten 16 ausgebildet. Die erste Ölnut 15 unterscheidet sich deutlich von den mehreren zweiten Ölnuten 16. So erstreckt sich die erste Ölnut 15 beginnend in einer radial inneren Stirnfläche 17 in Richtung auf eine radial äußere Stirnfläche 18 des Reibbelagssegments 6, endet jedoch in einem Abstand 19 vor dieser radial äußeren Stirnfläche 18. Mit anderen Worten erstreckt sich die erste Ölnut 15 nicht über die gesamte Breite des Reibbelagssegments 6 in radialer Richtung.

Der Abstand 19 kann ausgewählt sein aus einem Bereich von 20 % bis 60 %, insbesondere aus einem Bereich von 30 % bis 40 %, der Breite des Reibbelagssegments 6 in radialer Richtung.

Auch die zweiten Ölnuten erstrecken sich beginnend in der radial inneren Stirnfläche 17 in Richtung auf die radial äußere Stirnfläche 18 des Reibbelagssegments 6. Zum Unterschied zur ersten Ölnut 15 erstrecken sich die zweiten Ölnuten 18 aber in radialer Richtung durchgehend über die Breite des Reibbelagssegments 6 in radialer Richtung, enden also erst in der der radial äußeren Stirnfläche 18.

Darüber hinaus unterscheiden sich die zweiten Ölnuten 16 auch deutlich hinsichtlich einer maximalen Breite 19a in Umfangsrichtung 12 des Grundkörpers 7 (Fig. 2) von der ersten Ölnut 15. Die zweiten Ölnuten 16 eine maximale Breite 19a in Umfangsrichtung 12 des Grundkörpers 7 auf, die zwischen 1 % und 20 %, insbesondere zwischen 1 % und 10 %, vorzugsweise zwischen 1 % und 5 %, einer maximalen Breite 20 der ersten Ölnut 15 in gleicher Richtung beträgt. Die zweiten Ölnuten 16 sind also deutlich schmäler als die erste Ölnut 15 ausgeführt.

Mit maximaler Breite 19a bzw. 20 ist dabei jene Breite gemeint, die in der jeweiligen Ölnut am größten ist. Es besteht nämlich auch die Möglichkeit, dass sich die Breiten 19a, 20 aufgrund von verschiedenen Querschnittsformen der Ölnuten 15, 16 über ihren Verlauf ändert.

Die zweiten Ölnuten 16 weisen in radialer Richtung der Reiblamelle 5 einen ununterbrochenen und unverzweigten Verlauf von der radial inneren Stirnfläche 17 des Reibbelagssegments 6 bis in die radial äußeren Stirnfläche 18 des Reibbelagssegments 6 auf. Es zweigen also keine weiteren Nuten von den zweiten Ölnuten 16 ab.

Der Übergang von der radial inneren Stirnfläche 17 in die erste Ölnut 15 kann scharfkantig ausgeführt sein. Vorzugsweise ist dieser Übergang allerdings mit einer Rundung 21 versehen, um das Einströmverhalten des Schmiermittels in die erste Ölnut 15 zu verbessern, insbesondere um Verwirbelungen zu vermeiden.

Ebenso können die Übergänge von der radial inneren Stirnfläche 17 in die zweiten Ölnuten 15 und/oder von den Ölnuten 15 in die radial äußeren Stirnfläche 18 scharfkantig oder gerundet ausgeführt sein.

Wie besser aus Fig. 4 zu ersehen ist, weisen die zweiten Ölnuten 16 vorzugsweise einen in Richtung auf die Stirnfläche 17 bzw. 18 betrachtet dreieckförmigen Querschnitt auf. Die maximale Breite 19a dieser zweiten Ölnuten 16 bezieht sich bei dieser Ausführungsvariante der Querschnittsform auf die Breite 19a an einer äußeren Oberfläche 22 der Reibbelagssegmente 6. Die äußere Oberfläche 22 ist jene Oberfläche 22, die in Reibschluss mit der jeweiligen Gegenlamelle, also insbesondere der jeweiligen Außenlamelle 3 der Lamellenkupplung 1 (Fig. 1), schaltbar ist.

Ein Winkel 23, den die Nutseitenflächen der zweiten Ölnuten 16 mit dem dreieckförmigen Querschnitt miteinander einschließen, kann ausgewählt sein aus einem Bereich von 50 ° bis 110 °, insbesondere aus einem Bereich von 70 ° bis 90 °. Beispielsweise kann dieser Winkel 23 80 ° betragen.

Es sind aber auch andere Querschnittsformen für die zweiten Ölnuten 16 möglich, beispielsweise eine quadratische, eine rechteckförmige, eine trapezförmige (insbesondere mit der größten Abmessung an der Oberfläche 22 des Reibbelagselements 6), eine halbrunde, etc.. Die dreieckförmige Querschnittsform wird jedoch bevorzugt.

Die zweiten Ölnuten 16 weisen in der bevorzugten Ausführungsvariante eine Tiefe 24 in der Axialrichtung 4 (Fig. 1) der Reiblamelle 5 auf, die ausgewählt ist aus einem Bereich von 5 % bis 55 %, insbesondere 10 % bis 50 %, vorzugsweise 20 % bis 40 %, einer Gesamtdicke 25 des Reibbelagssegments 6 in gleicher Richtung.

In der bevorzugten Ausführungsvariante der Reiblamelle 5 erstreckt sich die erste Ölnut 15 in der Axialrichtung 4 der Reiblamelle 5 (Fig. 1) durchgehend durch das Reibbelagssegment 6. Den Nutengrund der ersten Ölnut 15 bildet in diesem Fall die erste Oberfläche 8 bzw. die zweite Oberfläche 9 des Grundkörpers 7 der Reiblamelle 5 (Fig. 1). Die erste Ölnut 15 weist also in dieser Ausführungsvariante eine Tiefe auf, die der Gesamtdicke 25 des Reibbelagssegments 6 entspricht. Das Reibbelagssegment 6 kann in diesem Fall einen in Draufsicht betrachtet annähernd U-förmigen Querschnitt aufweisen.

Es ist aber auch möglich, dass die erste Ölnut 15 eine im Vergleich dazu geringere Tiefe aufweist, wie dies in Fig. 3 strichliert angedeutet ist. In diesem Fall kann die Tiefe der ersten Ölnut 15 ausgewählt sein aus einem Bereich von 40 % bis 95 %, insbesondere von 50 % bis 95 %, vorzugsweise von 60 % bis 95 %, der Gesamtdicke 25 des Reibbelagssegments 6.

Es ist gemäß einer anderen Ausführungsvariante des Reibbelagssegments 6 möglich, dass die erste Ölnut 15 mit einem sich in Richtung auf die radial innere Stirnfläche 17 des Reibbelagssegments 6 erweiternden Querschnitt ausgebildet ist, wie dies in Fig. 3 dargestellt ist. Die erste Ölnut 15 weist in diesem Fall dann die maximale Breite 20 an der radial inneren Stirnfläche 17 auf.

Wie in Fig. 3 dargestellt, kann die erste Ölnut bei dieser Ausführungsvariante einen in Draufsicht annähernd trapezförmigen Querschnitt aufweisen, wobei jedoch das der radialen äußeren Stirnfläche 18 näher liegende Ende der ersten Ölnut 15 vorzugsweise abgerundet ist.

Es sind aber auch andere Querschnittsformen der ersten Ölnut 15, wiederum in Draufsicht betrachtet, möglich, beispielsweise ein rechteckförmiger, etc.

Sofern sich die erste Ölnut 15 nicht über die Gesamtdicke 15 des Reibbelagssegments 6 erstreckt, kann die erste Ölnut 15 auch in dieser Richtung, d.h. in Richtung der Tiefe der ersten Ölnut 15, einen sich verändernden Querschnitt aufweisen, wobei wiederum die maximale Breite 20 der ersten Ölnut 15 an der äußeren Oberfläche 22 des Reibbelagssegments 6 ausgebildet ist.

Gemäß einer weiteren Ausführungsvariante der Reiblamelle 5 kann vorgesehen sein, wie dies in Fig. 3 strichliert angedeutet ist, dass eine dritte Ölnut 26 an dem radial äußeren Ende der ersten Ölnut 15 anschließend angeordnet ist, und sich diese dritte Ölnut 26 bis in die radial äußere Stirnfläche 18 des Reibbelagssegments 6 erstreckt. Für diese dritte Ölnut 26 gelten bevorzugt die voranstehenden Ausführungen zu den zweiten Ölnuten 16, insbesondere betreffend die maximale Breite 19a und/oder die Tiefe 24 und/oder die Querschnittsform.

Nach einer Ausführungsvariante der Reiblamelle 5 dazu kann zur Vermeidung einer Stauwirkung vorgesehen sein, dass ein Übergang von der ersten Ölnut 15 in die dritte Ölnut 26 in radialer Richtung zumindest teilweise abgeschrägt ist.

In den Fig. 5 und 6 sind weitere und gegebenenfalls für sich eigenständige Ausführungsvarianten des Reibbelagssegments 6 und damit der Reiblamelle 5 gezeigt, wobei wiederum für gleiche Teile gleiche Bezugszeichen bzw. Bauteilbezeichnungen wie in den vorangegangenen Fig. 1 bis 4 verwendet werden. Um unnötige Wiederholungen zu vermeiden, wird auf die detaillierte Beschreibung zu diesen Fig. 1 bis 4 hingewiesen bzw. Bezug genommen. Insbesondere sei darauf hingewiesen, dass die Ausführungen betreffend die zweiten Ölnuten 15 und gegebenenfalls der dritten Ölnut 26, sowie zumindest teilweise die Ausführungen zur ersten Ölnut 15 entsprechend auch für die Ausführungsvarianten des Reibbelagssegments 6 nach den Fig. 5 und 6 anwendbar sind.

Bei der Ausführungsvariante des Reibbelagssegments 6 nach Fig. 5 weist die erste Ölnut 15 im Bereich des radial äußeren Endes eine Querschnittserweiterung 27 auf.

Es sei darauf hingewiesen, dass diese Querschnittserweiterung 27 nicht zur Bestimmung der maximalen Breite 20 der ersten Ölnut 15 herangezogen wird. Für die Bestimmung der maximalen Breite 20 der ersten Ölnut 15 wird nur jener Bereich der ersten Ölnut herangezogen, der vor dieser Querschnittserweiterung 27 liegt.

Mit dieser Ausführungsvariante des Reibbelagssegments soll weiter verdeutlicht werden, dass die erste Ölnut 15 auch - mit Ausnahme der Querschnittserweiterung 27 - eine konstante Breite 20 in Umfangsrichtung 12 der Reiblamelle 5 (Fig. 2) aufweisen kann, also nicht zwingend in Richtung auf die radial innere Stirnfläche 17 breiter werden muss, wenngleich dies bevorzugt ist.

Die Querschnittserweiterung 27 kann so ausgeführt sein, dass die erste Ölnut 15 in Draufsicht einen zumindest annähernd pilzförmigen Querschnitt aufweist.

Die Querschnittserweiterung 27 kann aber auch andere Querschnittsformen aufweisen (ebenfalls in Draufsicht auf das Reibbelagssegment 6 betrachtet), beispielsweise zumindest annähernd kreisförmig ausgebildet sein, wie dies in Fig. 5 strichliert angedeutet ist.

Die zweiten Ölnuten 16 und/oder die dritte Ölnut 26 sind bevorzugt derart angeordnet, dass sie sich in radialer Richtung der Reiblamelle 5 erstrecken, wie dies aus den Fig. 2 und 3 ersichtlich ist.

Es ist aber auch möglich, wie dies bei der Ausführungsvariante des Reibbelagssegments 6 nach Fig. 6 gezeigt ist, sich die zweiten Ölnuten 16 und/oder die dritte Ölnut 26 in einem spitzen Winkel 28 zur radialen Richtung erstrecken/ erstreckt.

Generell sei angemerkt, dass in den Darstellungen der Reibbelagssegmente 6 nach den Fig. 3 bis 5 jeweils eine zweite Ölnut links und rechts der ersten Ölnut 15 angeordnet ist. Ebenso wurde nur jeweils eine dritte Ölnut 26 dargestellt. Obwohl dies die bevorzugte Ausführungsvariante des Reibbelagssegments 6 und damit der Reiblamelle 5 ist, besteht auch die Möglichkeit, dass mehr als zwei zweite Ölnuten 15 und/oder mehr als eine dritte Ölnut 26 im Reibbelagssegment 6 vorgesehen werden können.

Die Ausführungsbeispiele zeigen bzw. beschreiben mögliche Ausführungsvarianten der Reiblamelle 5 bzw. des Reibbelagssegments 6, wobei an dieser Stelle bemerkt sei, dass auch diverse Kombinationen der einzelnen Ausführungsvarianten untereinander möglich sind.

Der Ordnung halber sei abschließend darauf hingewiesen, dass zum besseren Verständnis des Aufbaus die Lamellenkupplung 1 bzw. die Reiblamelle 5 bzw. das Reibbelagssegment 6 teilweise unmaßstäblich und/oder vergrößert und/oder verkleinert dargestellt wurden.

### Bezugszeichenaufstellung

- 1: Lamellenkupplung
- 2: Innenlamelle
- 3: Außenlamelle
- 4: Axialrichtung
- 5: Reiblamelle
- 6: Reibbelagssegment
- 7: Grundkörper
- 8: Oberfläche
- 9: Oberfläche
- 10: Verzahnung
- 11: Umfang
- 12: Umfangsrichtung
- 13: Abstand
- 14: Kanal
- 15: Ölnut
- 16: Ölnut
- 17: Stirnfläche
- 18: Stirnfläche
- 19: Abstand
- 19a: Breite
- 20: Breite
- 21: Rundung
- 22: Oberfläche
- 23: Winkel
- 24: Tiefe
- 25: Gesamtdicke
- 26: Ölnut
- 27: Querschnittserweiterung
- 28: Winkel

## Patentansprüche

1. Reiblamelle (5) für nasslaufende Anwendungen umfassend einen ringförmigen Grundkörper (7), der in axialer Richtung eine erste und eine zweite Oberfläche (8, 9) aufweist, und auf dem auf zumindest einer der ersten und der zweiten Oberfläche (8, 9) ein Reibbelag angeordnet ist, wobei der Reibbelag durch mehrere voneinander getrennte Reibbelagsegmente (6) gebildet ist, wobei in jedem der Reibbelagsegmente (6) eine erste Ölnut (15) und mehrere zweite Ölnuten (16) ausgebildet sind, wobei die ersten Ölnuten (15) sich von einer radial inneren Stirnfläche (17) der Reibbelagsegmente (6) in Richtung auf eine radial äußere Stirnfläche (18) der Reibbelagsegmente (6) erstrecken und beabstandet zur radial äußeren Stirnfläche (18) enden, derart, dass die zweiten Ölnuten (16) eine maximale Breite (19a) in Umfangsrichtung (12) des Grundkörpers (7) aufweisen, die zwischen 1 % und 20 % einer maximalen Breite (20) der ersten Ölnut (15) in gleicher Richtung beträgt und **dadurch gekennzeichnet, dass** sich die zweiten Ölnuten (16) ununterbrochen und unverzweigt von der radial inneren Stirnfläche (17) des Reibsegments (6) bis in die radial äußeren Stirnfläche (18) des Reibsegments (6) erstrecken.

2. Reiblamelle (5) nach Anspruch 1, **dadurch gekennzeichnet, dass** die zweiten Ölnuten (16) einen dreieckförmigen Querschnitt aufweisen.

3. Reiblamelle (5) nach Anspruch 1 oder 2, **dadurch gekennzeichnet, dass** eine dritte Ölnut (26) an dem radial äußeren Ende der ersten Ölnut (15) anschließend angeordnet ist, und sich diese dritte Ölnut (26) bis in die radial äußere Stirnfläche (18) des Reibbelagssegments (6) erstreckt.

4. Reiblamelle (5) nach Anspruch 3, **dadurch gekennzeichnet, dass** die dritte Ölnut (26) eine maximale Breite in Umfangsrichtung (12) des Grundkörpers (7) aufweist, die zwischen 1 % und 20 % einer maximalen Breite (20) der ersten Ölnut (15) in gleicher Richtung beträgt.

5. Reiblamelle (5) nach Anspruch 3 oder 4, **dadurch gekennzeichnet, dass** ein Übergang von der ersten Ölnut (15) in die dritte Ölnut (26) zumindest teilweise abgeschrägt ist.

6. Reiblamelle (5) nach einem der Ansprüche 1 bis 5, **dadurch gekennzeichnet, dass** die zweiten Ölnuten (16) und/oder die dritte Ölnut (26) eine Tiefe (24) in axialer Richtung aufweisen/aufweist, die zwischen 5 % und 55 % einer Gesamtdicke (25) des Reibbelagssegments (6) in gleicher Richtung beträgt.

7. Reiblamelle (5) nach einem der Ansprüche 1 bis 6, **dadurch gekennzeichnet, dass** sich die erste Ölnut (15) in axialer Richtung durchgehend durch das Reibbelagssegment (6) bis zum Grundkörper (7) erstreckt.

8. Reiblamelle (5) nach einem der Ansprüche 1 bis 7, **dadurch gekennzeichnet, dass** die erste Ölnut (15) mit einem sich in Richtung auf die radial innere Stirnfläche (17) des Reibbelagssegments (6) erweiternden Querschnitt ausgebildet ist.

9. Reiblamelle (5) nach einem der Ansprüche 1 bis 8, **dadurch gekennzeichnet, dass** die erste Ölnut (15) im Bereich des radial äußeren Endes mit einer Querschnittserweiterung (17) ausgebildet ist.

10. Reiblamelle (5) nach Anspruch 9, **dadurch gekennzeichnet, dass** die erste Ölnut (15) zumindest annähernd pilzförmig ausgebildet ist.

11. Reiblamelle (5) nach einem der Ansprüche 1 bis 10, **dadurch gekennzeichnet, dass** sich die zweiten Ölnuten (16) und/oder die dritte Ölnut (26) in radialer Richtung erstrecken/erstreckt.

12. Reiblammelle (5) nach einem der Ansprüche 1 bis 10, **dadurch gekennzeichnet, dass** sich die zweiten Ölnuten (16) und/oder die dritte Ölnut (26) in einem spitzen Winkel (28) zur radialen Richtung erstrecken/ erstreckt.

13. Nasslaufende Lamellenkupplung (1) umfassend mehrere Innenlamellen (2) und mehrere Außenlamellen (3), wobei in axialer Richtung die Innenlamellen (2) und die Außenlamellen (3) abwechselnd angeordnet sind, **dadurch gekennzeichnet, dass** die Innenlamellen (2) als Reiblamellen (5) nach einem der Ansprüche 1 bis 12 ausgebildet sind.

## Claims

1. A friction disc (5) for wet-running applications comprising a ring-shaped basic body (7) which has a first and a second surface (8, 9) in the axial direction and on which a friction lining is arranged on at least one of the first and second surface (8, 9), wherein the friction lining is formed by a plurality of friction lining segments (6) separated from one another, wherein in each of the friction lining segments (6) a first oil groove (15) and a plurality of second oil grooves (16) are configured, wherein the first oil grooves (15) extend from a radially inner face (17) of the friction lining segments (6) in the direction of a radially outer face (18) of the friction lining segments (6) and end spaced apart from the radially outer face (18) in such a manner that the second oil grooves (16) have a maximum width (19a) in the peripheral direction (12) of the base body (7) which amounts to between 1 % and 20 % of a maximum width (20) of the first oil groove (15) in the same direction and **characterized in that** the second oil grooves (16) are uninterrupted and unbranched from the radially inner face (17) of the friction segment (6) into the radially outer face (18) of the friction segment (6).

2. The friction disc (5) according to claim 1, **characterized in that** the second oil grooves (16) exhibit a triangular cross section.

3. The friction disc (5) according to claim 1 or 2, **characterized in that** a third oil groove (26) is arranged adjacent to the radially outer end of the first oil groove (15) and this third oil groove (26) extends into the radially outer face (18) of the friction disc segment (6).

4. The friction disc (5) according to claim 3, **characterized in that** the third oil groove (26) has a maximum width in the peripheral direction (12) of the base body (7) which is between 1 % and 20 % of a maximum width (20) of the first oil groove (15) in the same direction.

5. The friction disc (5) according to claim 3 or 4 **characterized in that** a transition from the first oil groove (15) into the third oil groove (26) is at least partially bevelled.

6. The friction disc (5) according to one of claims 1 to 5, **characterized in that** the second oil grooves (16) and/or the third oil groove (26) have/has a depth (24) in the axial direction which is between 5 % and 55 % of a total thickness (25) of the friction disc segment (6) in the same direction.

7. The friction disc (5) according to one of claims 1 to 6, **characterized in that** the first oil groove (15) extends in an axial direction continuously through the friction lining segment (6) to the base body (7).

8. The friction disc (5) according to one of claims 1 to 7, **characterized in that** the first oil groove (15) is configured with a cross section widening in the direction of the radially inner face (17) of the friction disc segment (6).

9. The friction disc (5) according to one of claims 1 to 8, **characterized in that** the first oil groove (15) is configured in the region of the radially outer end with a cross-sectional widening (17).

10. The friction disc (5) according to claim 9, **characterized in that** the first oil groove (15) is configured at least approximately in a mushroom shape.

11. The friction disc (5) according to one of claims 1 to 10, **characterized in that** the second oil grooves (16) and/or the third oil groove (26) extend/extends in a radial direction.

12. The friction disc (5) according to one of claims 1 to 10, **characterized in that** the second oil grooves (16) and/or the third oil groove (26) extend/extends at an acute angle (28) to the radial direction.

13. A wet-running disc clutch (1) comprising a plurality of inner discs (2) and a plurality of outer discs (3), wherein the inner discs (2) and the outer discs (3) are arranged alternately in the axial direction, **characterized in that** the inner discs (2) are configured as friction discs (5) according to one of claims 1 to 12.

## Revendications

1. Lamelle de friction (5) pour des applications lubrifiées comprenant un corps de base annulaire (7), qui comprend dans la direction axiale une première et une deuxième surface (8, 9) et sur lequel, sur au moins une de la première et de la deuxième surface (8, 9), est disposée une garniture de friction, la garniture de friction étant constituée de plusieurs segments de garniture de friction (6) séparés les uns des autres, moyennant quoi, dans chacun des segments de garniture de friction (6) sont réalisées une première rainure de lubrification (15) et plusieurs deuxièmes rainures de lubrification (16), les premières rainures de lubrification (15) s'étendant d'une face frontale radiale (17) des segments de garniture de friction (6) en direction d'une face frontale externe radiale (18) des segments de garniture de friction (6) et se terminant à une certaine distance de la face frontale externe radiale (18), de façon à ce que les deuxièmes rainures de lubrification (16) présentent une largeur maximale (19a) dans la direction circonférentielle (12) du corps de base (7), qui représente entre 1 % et 20 % d'une largeur maximale (20) de la première rainure de lubrification (15) dans la même direction et **caractérisée en ce que**
les deuxièmes rainures de lubrification (16) s'étendent sans interruption et sans embranchement de la face frontale interne radiale (17) du segment de friction (6) jusque dans la face frontale externe radiale (18) du segment de friction (6).

2. Lamelle de friction (5) selon la revendication 1, **caractérisée en ce que** les deuxièmes rainures de lubrification (16) présentent une section transversale triangulaire.

3. Lamelle de friction (5) selon la revendication 1 ou 2, **caractérisée en ce qu'**une troisième rainure de lubrification (26) est disposée de façon à se raccorder à l'extrémité externe radiale de la première rainure de lubrification (15) et cette troisième rainure de lubrification (26) s'étend jusque dans la face frontale externe radiale (18) du segment de garniture de friction (6).

4. Lamelle de friction (5) selon la revendication 3, **caractérisée en ce que** la troisième rainure de lubrification (26) présente une largeur maximale dans la direction circonférentielle (12) du corps de base (7) qui représente entre 1 % et 20 % d'une largeur maximale (20) de la première rainure de lubrification (15) dans la même direction.

5. Lamelle de friction (5) selon la revendication 3 ou 4, **caractérisée en ce qu'**une transition entre la première rainure de lubrification (15) et la troisième rainure de lubrification (26) est au moins partiellement chanfreinée.

6. Lamelle de friction (5) selon l'une des revendications 1 à 5, **caractérisée en ce que** les deuxièmes rainures de lubrification (16) et/ou la troisième rainure de lubrification (26) présentent une profondeur (24) dans la direction axiale qui représente entre 5 % et 55 % d'une épaisseur totale (25) du segment de garniture de friction (6) dans la même direction.

7. Lamelle de friction (5) selon l'une des revendications 1 à 6, **caractérisée en ce que** la première rainure de lubrification (15) s'étend dans la direction axiale de manière continue à travers le segment de garniture de friction (6) jusqu'au corps de base (7).

8. Lamelle de friction (5) selon l'une des revendications 1 à 7, **caractérisée en ce que** la première rainure de lubrification (15) est conçue avec une section transversale qui s'élargit vers la face frontale interne radiale (17) du segment de garniture de friction (6).

9. Lamelle de friction (5) selon l'une des revendications 1 à 8, **caractérisée en ce que** la première rainure de lubrification (15) est conçue, au niveau de l'extrémité externe radiale, avec un élargissement de section transversale (17).

10. Lamelle de friction (5) selon la revendication 9, **caractérisée en ce que** la première rainure de lubrification (15) présente au moins approximativement une forme de champignon.

11. Lamelle de friction (5) selon l'une des revendications 1 à 10, **caractérisée en ce que** les deuxièmes rainures (16) et/ou la troisième rainure de lubrification (26) s'étendent dans la direction radiale.

12. Lamelle de friction (5) selon l'une des revendications 1 à 10, **caractérisée en ce que** les deuxièmes rainures (16) et/ou la troisième rainure de lubrification (26) s'étendent avec un angle aigu (28) par rapport à la direction radiale.

13. Embrayage à lamelles lubrifié (1) comprenant plusieurs lamelles internes (2) et plusieurs lamelles externes (3), les lamelles internes (2) et les lamelles externes (3) étant disposées de manière alternée dans la direction axiale, **caractérisé en ce que** les lamelles internes (2) sont conçues comme des lamelles de friction (5) selon l'une des revendications 1 à 12.
